# EUROPEAN PATENT SPECIFICATION

(11) **EP 4 432 101 B1**
(45) Date of publication and mention of the grant of the patent: **23.07.2025**
(21) Application number: 24160248.1
(22) Date of filing: 28.02.2024
(51) Int. Cl.: G06F 12/0815, G06F 12/0868, G06F 12/0891

(54) **SYSTEMS AND METHODS FOR COMPUTING WITH MULTIPLE NODES**
SYSTEME UND VERFAHREN ZUR DATENVERARBEITUNG MIT MEHREREN KNOTEN
SYSTÈMES ET PROCÉDÉS DE CALCUL AVEC DE MULTIPLES N UDS

(30) Priority: 14.03.2023 US 202363452114 P; 29.03.2023 US 202363455554 P; 09.10.2023 US 202318483486
(43) Date of publication of application: 18.09.2024
(73) Proprietor: Samsung Electronics Co., Ltd., Suwon-si, Gyeonggi-do 16677 (KR)
(72) Inventor: GARA, Alan, San Jose, CA, 95134 (US); RODRIGUES, Arun, San Jose, CA, 95134 (US); JOSEPH, Douglas, San Jose, CA, 95134 (US); WISNIEWSKI, Robert, San Jose, CA, 95134 (US); RIESEN, Rolf, San Jose, CA, 95134 (US); SURY, Samantika, San Jose, CA, 95134 (US)
(74) Representative: Kuhnen & Wacker Patent- und Rechtsanwaltsbüro PartG mbB

(56) References cited:
- US-B1- 8 307 194

## Description

### FIELD

One or more aspects of embodiments according to the present disclosure relate to computing systems, and more particularly to systems and methods for computing with multiple nodes.

### BACKGROUND

To increase the processing capacity of a computing system, it may be advantageous to assemble large numbers of computing systems, capable of exchanging data with each other.

It is with respect to this general technical environment that aspects of the present disclosure are related.

From US 8 307 194 B1 it is known a method and apparatus to support a memory consistency model for multistream processing.

### SUMMARY

A method according to the invention is defined in claim 1 and a system according to the invention is defined in claim 11. Further developments of the method according to the invention are defined in claims 2 to 10.

### BRIEF DESCRIPTION OF THE DRAWINGS

These and other features and advantages of the present disclosure will be appreciated and understood with reference to the specification, claims, and appended drawings wherein:
FIG. 1 is a system level block diagram, according to an embodiment of the present disclosure;
FIG. 2A is a block diagram of a cache line with a comparator, according to an embodiment of the present disclosure;
FIG. 2B is a block diagram of a cache line with associated logic, according to an embodiment of the present disclosure;
FIG. 2C is a block diagram of a cache line with associated logic, according to an embodiment of the present disclosure;
FIG. 2D is a block diagram of a cache line with associated logic, according to an embodiment of the present disclosure;
FIG. 2E is a block diagram of a system for selective cache invalidation, according to an embodiment of the present disclosure;
FIG. 3A is a block diagram of a system for mapping global virtual addresses, according to an embodiment of the present disclosure;
FIG. 3B is a block diagram of a portion of a system for mapping global virtual addresses, according to an embodiment of the present disclosure;
FIG. 4 is a block diagram of a system for tracking access violations, according to an embodiment of the present disclosure;
FIG. 5A is a block diagram of a global atomic with update and trigger operation, according to an embodiment of the present disclosure;
FIG. 5B is a block diagram of a global load and broadcast operation, according to an embodiment of the present disclosure; and
FIG. 5C is a block diagram of a global store and broadcast operation, according to an embodiment of the present disclosure.

### DETAILED DESCRIPTION

The detailed description set forth below in connection with the appended drawings is intended as a description of exemplary embodiments of systems and methods for computing with multiple nodes provided in accordance with the present disclosure and is not intended to represent the only forms in which the present disclosure may be constructed or utilized. The description sets forth the features of the present disclosure in connection with the illustrated embodiments. It is to be understood, however, that the same or equivalent functions and structures may be accomplished by different embodiments that are also intended to be encompassed within the scope of the disclosure. As denoted elsewhere herein, like element numbers are intended to indicate like elements or features.

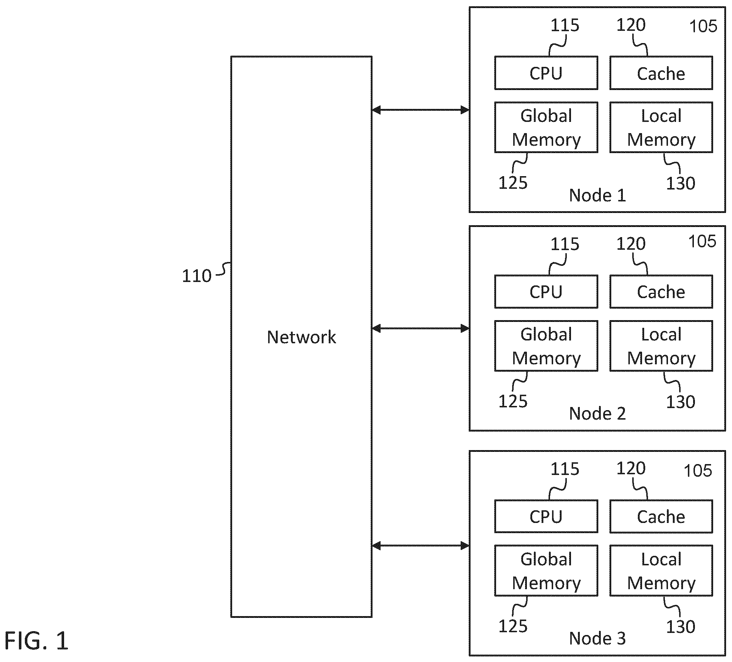

FIG. 1 is a block diagram of a computing system, in some embodiments. A plurality of nodes 105 is connected together by a network 110. Each node includes one or more central processing units (CPUs) 115, one or more caches 120, a global memory section 125 and a local memory 130. Three nodes Node 1, Node 2 and Node 3 are shown in FIG. 1 for ease of illustration; some embodiments may include fewer (e.g., two) nodes, or more (e.g., tens, hundreds, or thousands) of nodes.

Within each node, cache coherence may be maintained by the hardware of the node, and, as used herein, a "node" is a computing system within which cache coherence is maintained by hardware.

The local memory of each node 105 may be accessible only by the CPU 115 (or CPUs 115) of the node 105. The global memory section 125 of each node 105 may be accessible by all of the nodes 105 including the node 105 (referred to as the "home node") within which the global memory section 125 resides. The global memory sections 125 of all of the nodes may together form a single global memory, and a single physical global address space may be used to address data within the global memory.

In operation, one or more threads may run on each of the nodes 105. It may be advantageous for the threads to share data; for example, a first thread running on a first node may produce data that is then saved at a designated address in the global memory, and read and consumed by a second thread running on a second node. In such a situation, it may be advantageous for the second thread to avoid reading from the designated address in the global memory before the first thread has produced the data and saved the data to the designated address in the global memory.

As such, various methods may be employed to ensure the synchronization, for purposes of data exchange, between threads. Such methods are explained here for a computing system that includes three nodes 105, each node 105 including a single cache 120, and a single CPU 115 running a single thread. As such, each thread is associated with a single cache, and the cache of a thread (or the cache associated with a thread) means the cache 120 of the CPU 115 on which the thread is running. The synchronization methods explained here may be generalized to computing systems with more nodes 105, more than one cache 120 per node, more than one CPU 115 per node, and more than one thread per CPU 115.

For example, each node 105 may (e.g., one thread running on each node may) (i) initiate a global synchronization command, (ii) flush all modified values from its cache 120 to the global memory, (iii) invalidate a portion (e.g., all) of its cache 120 (iv) indicate to the other nodes that it has completed the time step synchronization, and (v) wait for the other nodes 105 to similarly indicate that they have completed the time step synchronization before subsequently reading from the global memory (e.g., before executing further instructions). This sequence of steps, during which normal processing is halted, may be referred to as a global synchronization operation. As used here, "initiating" a global synchronization operation means any action that results in a temporary ceasing of read operations from global memory (including read operations from cached copies of global memory). As used herein, a "time step" is the interval between two consecutive global synchronization operations. As used herein, when a node has "completed a time step synchronization" it means that the node is prepared to resume normal processing, and is waiting, if necessary, for each of the other nodes to complete a time step synchronization. The global synchronization command may be an instruction, or set of instructions, in the code executed by the thread running on the node. For example, it may a special-purpose machine instructions implemented in the CPU 115 for the purpose of performing global synchronization, or it may be a read or write operation to a dedicated memory address mapped to special purpose hardware in the node 105, or it may be a function call to a function that performs the participation in global synchronization.

If a producer thread is configured to transmit data to a consumer thread by saving the data at a certain designated memory address in the global memory, then the global synchronization operation may prevent the fetching of data from global memory by a consumer thread before the data to be fetched has been saved by a producer thread. For example, a first thread (a producer thread) may generate an intermediate result and save it (e.g., in its cache) and then execute a global synchronization command. The consumer thread may first execute a corresponding global synchronization command, and then fetch, for further processing, the data produced by the producer thread. As part of the global synchronization operation, the producer thread may flush the intermediate result to the global memory, and the consumer thread may invalidate its cache (so that if a previous value fetched from the global memory is saved in the cache of the consumer thread, it will not be used). The consumer thread may then wait until all of the other nodes 105 have completed the global synchronization operation before continuing its processing. This waiting may ensure that the value in the designated memory address has been updated by the producer thread when the consumer thread resumes processing, and the invalidating of the cache of the consumer thread may ensure the that the consumer thread obtains the updated value from the designated memory address in global memory (and not a potentially stale value from its cache) when it reads the intermediate result.

In some embodiments, special load and store instructions, referred to herein as a global load instruction and a global store instruction may be used instead of (or in addition to) the flushing of the producer thread's cache and the invalidating of the consumer thread's cache. A global load instruction may fetch data from the global memory even if the data is already in the cache, and it may replace the cached value with the fetched value. A global store instruction may store data to the global memory (even if the address the data is being stored in is currently in the cache). Word enable bits in the Network on Chip (NOC) and switch transactions may be used to perform a read-modify-write of the target last level cache (LLC) cache line. In an embodiment in which the producer thread uses a global store instruction and the consumer thread uses a global load instruction, the global synchronization operation may consist of (i) initiating a global synchronization command (ii) indicating, by the node, that it has completed a time step synchronization (i.e., that it is prepared to resume normal processing) and (iii) waiting until all of the other nodes have indicated that they have completed a time step synchronization.

If the producer thread stores the intermediate result in the designated memory address of global memory using a global store instruction prior to (or as part of) the global synchronization operation, and if the consumer thread reads the intermediate result from the designated memory address of global memory using a global load instruction when performing an initial read after the global synchronization operation, then it may be unnecessary for the producer thread to flush its cache and it may also be unnecessary for the consumer thread to invalidate its cache. Addresses in the global memory for which the software running on the nodes 105 ensures that the last store instruction before a global synchronization operation is a global store instruction and the first read after a global synchronization operation is a global read instruction, and the data stored at these addresses, may be referred to as "protected" addresses and "protected" data, respectively.

Other global commands that may be of use include a global flush instruction, a global invalidate instruction, and a global flush and invalidate instruction. The global flush instruction may flush all modified copies of global data in the local cache hierarchy to the global memory, without invalidating. The global invalidate instruction may invalidate all copies of global data in the cache hierarchy, without flushing modified copies. The global flush and invalidate instruction may invalidate all copies of global data in the local cache hierarchy and flush all modified copies back to the global memory. An override bit may be set for select memory regions (in the Global Address Tuple (GAT) tables (discussed in further detail below)) that turn global flush and global invalidate instructions into global flush and invalidate instructions for that region. Copies of global data in the L1 and L1.5 caches may always be invalidated at a global synchronization operation, and modified copies may be flushed to L2 even for global flush and global invalidate instructions.

Various methods of communication between the nodes 105 may be used as part of the global synchronization operation. For example, each node may perform a global atomic read-modify-write (discussed in further detail below) of a counter value at a designated address in the global memory (e.g., to increment the counter by one) when it completes flushing and invalidating the cache (or, in an embodiment in which the cache is not flushed or invalidated, when it has completed a time step synchronization), and each node 105 may then periodically read the value at the address (e.g., using a global load operation to avoid reading a cached value) until the counter is equal to the number of participating nodes. In such an embodiment one of the nodes (e.g., the home node of the memory containing the designated address) may reset the counter to zero at the beginning of each global synchronization operation.

In some embodiments, a method for efficient invalidation of cached data is used. As mentioned above, as part of the global synchronization operation each node may invalidate a portion of its cache (e.g., its entire cache). Some of the cache may, however, cache data from the local memory, and it may be unnecessary to invalidate this portion of the cache. As such, during the global synchronization operation, software in the node may inspect each value stored in the cache, determine from metadata (e.g., from the associated memory address) whether it is cached global memory or cached local memory, and invalidate the entry only if it is cached global memory. Such a method may be time-consuming, however. In some embodiments, therefore, the invalidating of cache entries is performed in parallel for all of the cache entries, e.g., using a "bulk invalidate" operation performed by dedicated hardware that is part of the same integrated circuit as the cache.

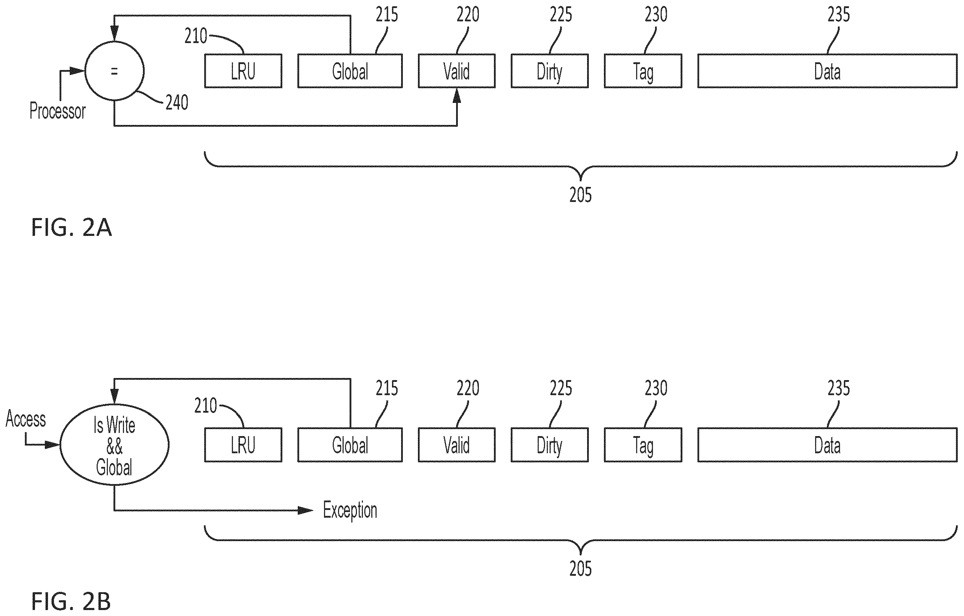

For example, referring to FIG. 2A, each cache line 205 may include metadata, including a least recently used (LRU) field 210, a global bit 215, a valid bit 220, a dirty bit 225, and a tag 230. In addition to the metadata, the cache line may include a data value 235 (e.g., 64 bytes of data). The global data bit 215 may operate as a flag indicating whether the cache line 205 is to be invalidated when a bulk invalidate operation is performed. As illustrated in FIG. 2A, a comparator (e.g., a hardware comparator) 240 may be connected to each cache line; when a bulk invalidate operation is performed, the comparator may check the global bit 215 and if the global bit indicates that the data value 235 is a global data value, the comparator may invalidate the cache line (e.g., by setting the valid bit to a value that indicates that the cache line is invalid). The cache may be part of an integrated circuit, and the other hardware illustrated in FIGs. 2A - 2E (e.g., the comparator 240) may be part of the same integrated circuit. Each of the global bit 215 and the valid bit 220 may be configured (by suitable design of the hardware using and setting these bits) to represent true (e.g., to represent that the data value 235 is a global data value or to represent that the cache line is valid) as binary zero or to represent true as binary 1.

Referring to FIG. 2B, in some embodiments, the global bit 215 may also be used to make sure global data is not modified during a time step. Such a modification can raise an exception to let the program know that an illegal modification has occurred. During each cache access the global bit 215 may be examined, and if the access is a write access and the global bit 215 is set, an exception may be raised.

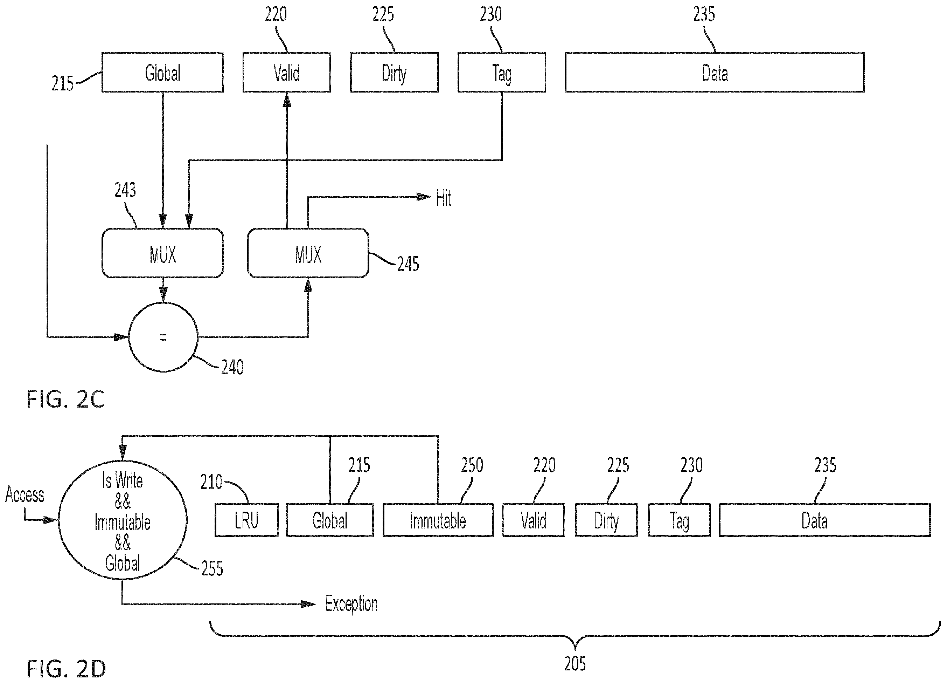

Referring to FIG. 2C, in some embodiments, to save area, instead of adding a comparator to each cache line, the existing comparator that is already present at each cache line for tag comparisons is reused, during a bulk invalidate operation, to check the global bit 215 and invalidate the cache line if appropriate. In such an embodiment a first multiplexer 243 may be added before the comparator. Regular cache accesses may select the tag field and compare it with the cache address tag. Buk invalidates may select the global bit 215 and compare it with the bit supplied by the invalidate instruction. The result of this comparison (the output of the comparator) may be fed to a second multiplexer 245. For regular accesses the result may indicate a cache hit or miss. For bulk invalidate operations, the valid bit 220 of the cache line may be set to false.

In some embodiments, each cache line 205 further includes an 'immutable' bit 250, as illustrated in FIG. 2D. During each cache access, the comparison logic 255 may raise an exception if the access is a write and the global bit 215 and the 'immutable' bit 250 are both set.

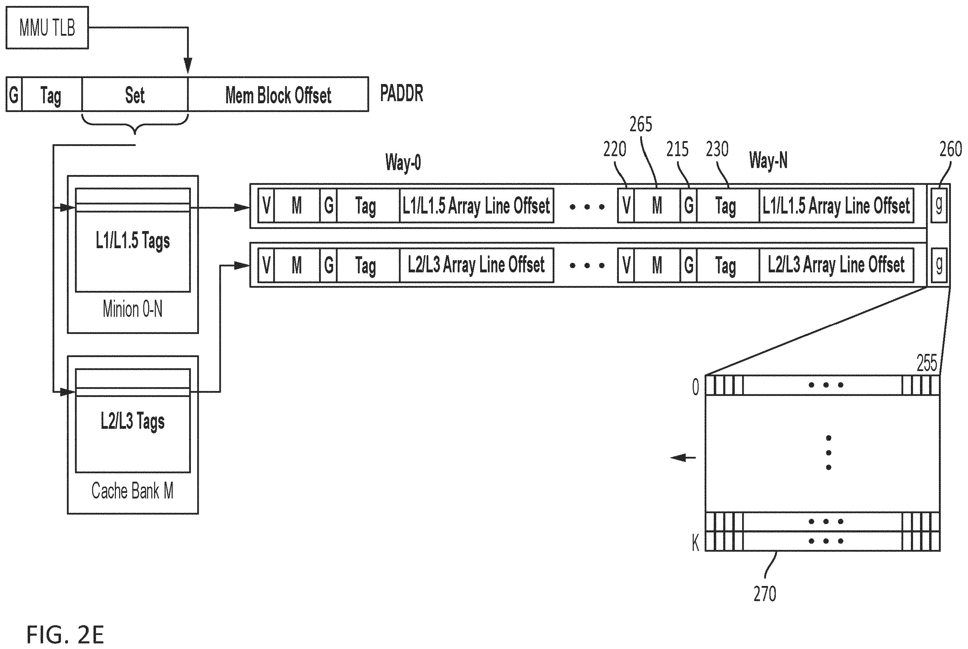

In some embodiments, as illustrated in FIG. 2E, a summary global bit 260 is maintained for each of a plurality of global bits 215. In such an embodiment, if the summary global bit 260 is not set, it may be unnecessary for the system to check each of the contributing global bits 215.

In FIG. 2E, V is the valid bit 220, signifying a valid cache line; M is a set of modified bits 265, which is a set of n bits for tracking sub-line modifications; and G is the global bit 215, indicating whether a global memory address (or a local memory address) is cached.

The global memory (GMEM) tracking bit array table 270 may include one summary 'global' bit (g) per set. The bit may be set when block state G=1. The size of the array may be a function f(size of cache, cache line size, ways), with Z = size of cache data array (Bytes); L = size of cache line (bytes); W = number of ways; and tracking array size = Z / (L*W) bits.

At the end of each time step, the home node may scan rows of the tracking table. For an X bit wide tracking table, this may process X bits per clock. For each bit that is a 1, the home node may scan each way in the corresponding set. For each way with G=1 and M=0, the home node may invalidate the line. For each way with G=1 and M=1, the home node may flush and invalidate the line. In a first example, Z=8KB, L=64B, W=4, and X=32b. In this example, the tracking table size = 32 bits, corresponding to 1 row. At a clock rate of 1 GHz, this corresponds to 1 ns to scan the tracking table. In a second example, Z=2MB, L=64B, W=8, and X=256b. In this example, the tracking table size = 4K bits, which corresponds to 16 rows. At a clock rate of 1 GHz this corresponds to 16 ns to scan the tracking table.

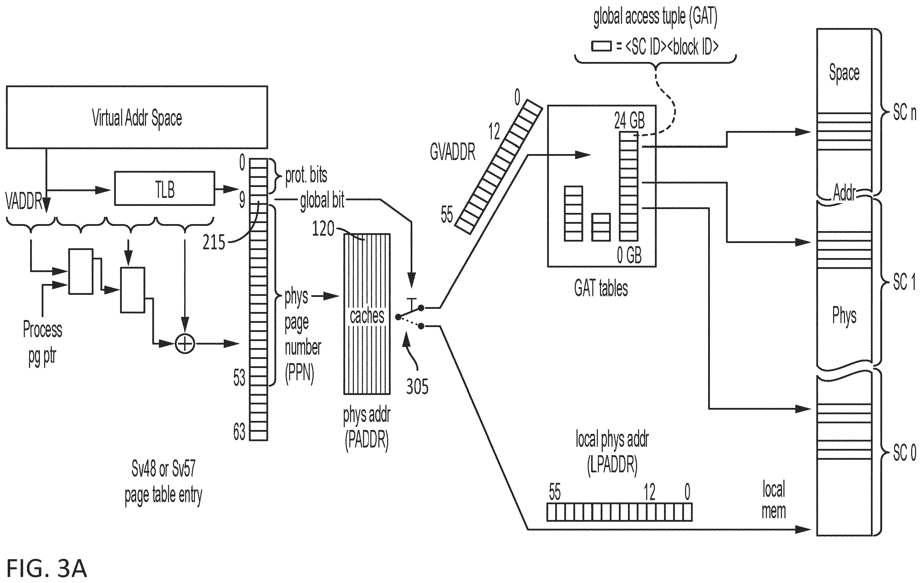

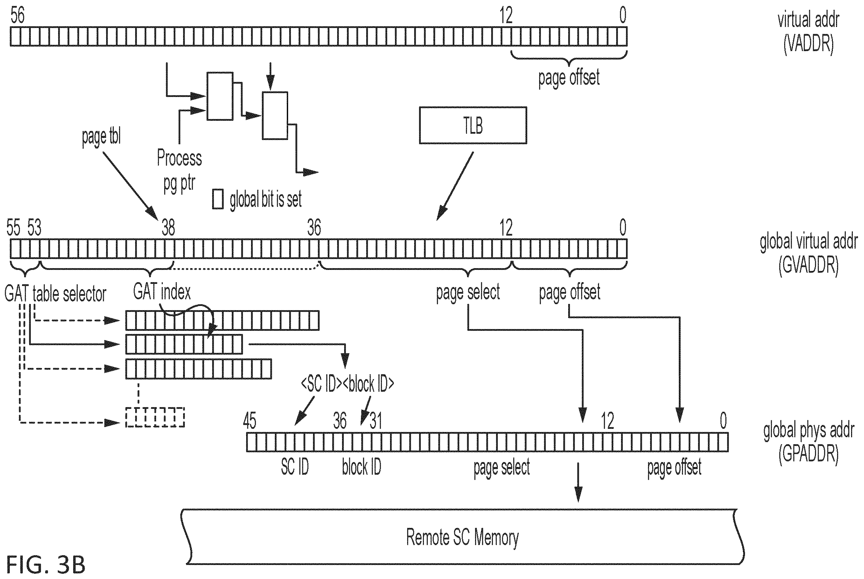

FIG. 3A shows a system for mapping physical addresses (PADDRs) to addresses in the global memory and in the local memories 130. The virtual address used by a CPU is mapped, using a translation lookaside buffer (TLB) and a process page pointer, to a physical address, which is fed to one or more caches 120. If a cache miss occurs, then depending on the value of the global bit 215, the physical address is either (i) directly used as the address into the local memory 130 (if the global bit 215 indicates that the address is an address in local memory) or (ii) if the global bit 215 indicates that the address is an address in global memory), the physical address is treated as a global virtual address (GVADDR) . This selection operation is represented by the switch symbol 305 of FIG. 3A. If the global bit 215 indicates that the address is an address in global memory, then the global virtual address is mapped to a global address tuple (GAT) that includes a node identifier (SC ID) of the home node for the memory at the address, and a block identifier. FIG. 3B illustrates the mapping of the global virtual address to (i) the global address tuple (ii) a page select value and (iii) a page offset value.

The software running on the nodes 105 may be designed such that during any one time step, only node modifies the data in any location of the global memory. As such, if it occurs that in one time step two or more nodes 105 modify the data at any address, this occurrence may be an indication of an error in the code (or elsewhere, e.g., in the hardware), and reporting of the error may be helpful (i) in correcting errors in the system or (ii) in avoiding the subsequent use of results generated by a process that showed indications of errors. Checking for such errors may be performed as follows. Each time the data at a memory address in the home node is modified, a record of the modification may be stored in a hash table; with the location in the hash table being determined by hashing the global memory address of the modified data. The node identifier of the node that modified the data may be stored in the hash table. Moreover, when the record is stored in the hash table, the home node may check the hash table to determine whether, during the present time step, the same memory location was modified by another node 105, and, if so, the home node may raise an exception.

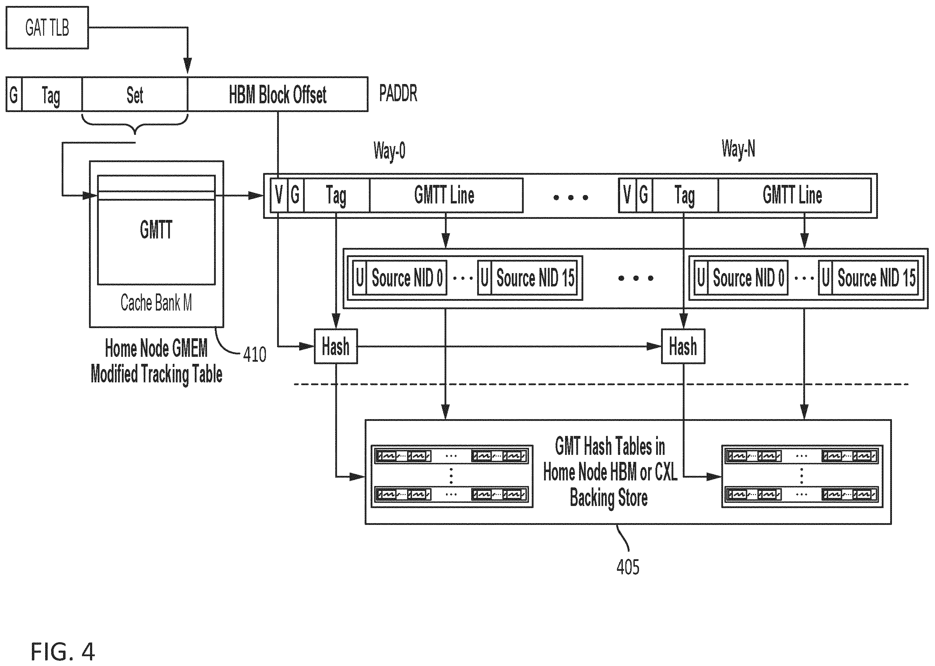

FIG. 4 shows this process of home node tracking of modified global memory and time step violations in greater detail. A global memory tracking (GMT) hash table 405 is maintained as described above. Portions of the hash table are cached in a global memory tracking table (GMTT) 410. The functions illustrated in FIG. 4 may be implemented using the directories of the cache banks of the home node. In FIG. 4, V indicates a Valid Cache Line; G is the global bit 215; U is an update bit, indicating that a node with node ID "Source NID" updated the line sector; and Source NID is the node ID of request source.

On each eviction to home node memory (e.g., High Bandwidth Memory (HBM)), the node 105 may look up the set in the GMTT 410 and compare way tags. If the tags match, the node 105 may extract the GMTT line. For each M-bit in the request that is equal to 1, the node 105 may extract the corresponding GMTT element, and (i) if U is equal to 0, it may write the node ID (NID) from the request into Source_NID; otherwise (ii) if the NID from the request is not equal to Source_NID, it may log the violation and raise an exception. Otherwise (if the tags do not match), the home node may select way to evict (e.g., using a least recently used (LRU) method), evict the GMTT line to the GMT hash table 405 (backing store) (resizing the hash table 405 if it is at capacity). If the current request hits in the GMT hash table 405, the home node may fetch and load into the GMTT 410 the way and update the tag. For each M-bit in the request that is equal to 1, the home node may then extract the corresponding GMTT element. If the U bit is equal to zero, the home node may write the NID from the request into Source_NID; otherwise, if the NID from the request is not equal to Source NID, the home node may log the violation and raise an exception. Otherwise (if the current request does not hit in the GMT hash table 405), the home node may zero out the GMTT way, and update the tag.

In some embodiments, at the end of a time step, every node flushes modified global data to the home node. After GMT processing completes, all GMTT and GMT hash tables are cleared and reset.

The global memory tracking table (GMTT) may be constructed based on the following parameters: T = size of tag in bits; K = SIZE OF Source NID in bits; S = number GMTT sets; W = number GMTT Ways; and N = number of tracking elements per line (N= 16 in the example of FIG. 4, one bit per 32 bit word). In this example, GMTT Size (bytes) = (S*W*((T+2)+N*(K+1))) / 8. For example, for T = 40 b, K = 11b, S = 1K, W = 8, and N = 16, GMTT Size = (4K*8*((40+2)+16*(11+1))) / 8 ~= 240KB.

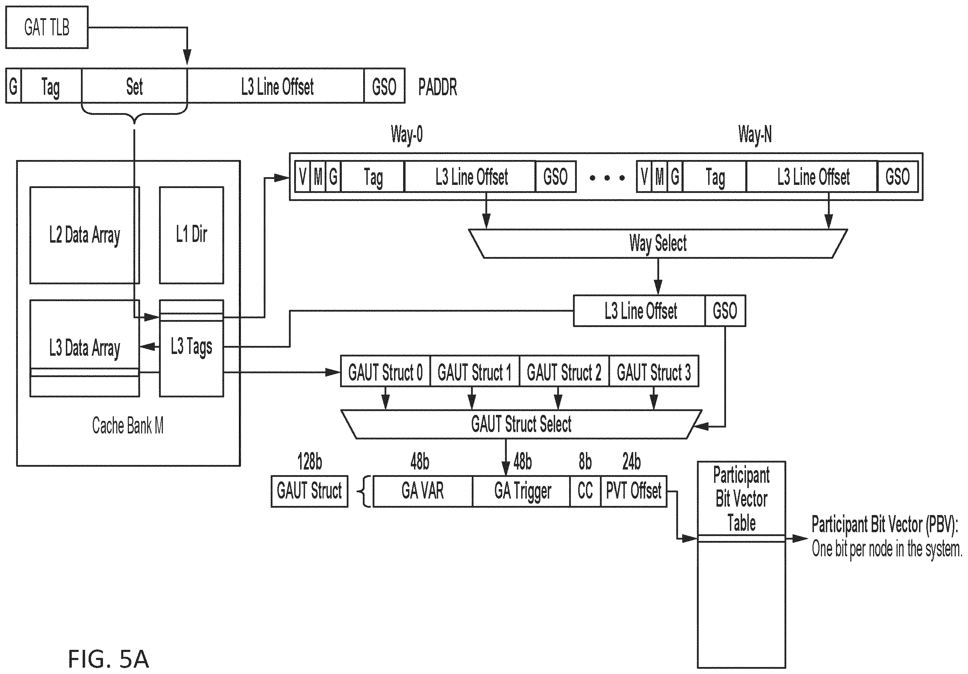

FIGs. 5A - 5C illustrate implementations of several global instructions. FIG. 5A illustrates a global atomic instruction with update and trigger (GAUT). This operation may for example allow a plurality of participating nodes to each increment a counter (to indicate that another node has completed a time step synchronization); when the counter value exceeds a threshold, a notification is broadcast notifying all nodes that each node has completed a time step synchronization. Flag Definitions include the following: V indicates a valid cache line; M indicates a modified cache line; G is the global bit 215; and GSO is a GAUT structure offset. The fields of the GAUT structure may include the following: GA VAR, a global atomic variable; GA Trigger, a global atomic trigger threshold; CC, a credit counter; and PVT Offset, a participant bit vector table offset. For each global atomic operation at the home node level 3 cache (L3), if L3 is hit, the home node may fetch an L3 line and select the target GAUT structure. The home node may then atomically update GA VAR (the atomic operation in the transaction). If GA VAR is greater than or equal to GA Trigger, the home node may fetch an entry from the participant bit vector (PBV) table. For each bit that is equal to one, the home node may issue an update to the corresponding node. It may then perform (i) an atomic increment of the specified credit counter (CC) on that node or (ii) synthesize a wait on event response. Otherwise (in case of an L3 miss), the home node may fetch L3 line from back memory, and install it in L3 and continue processing as though a hit had occurred.

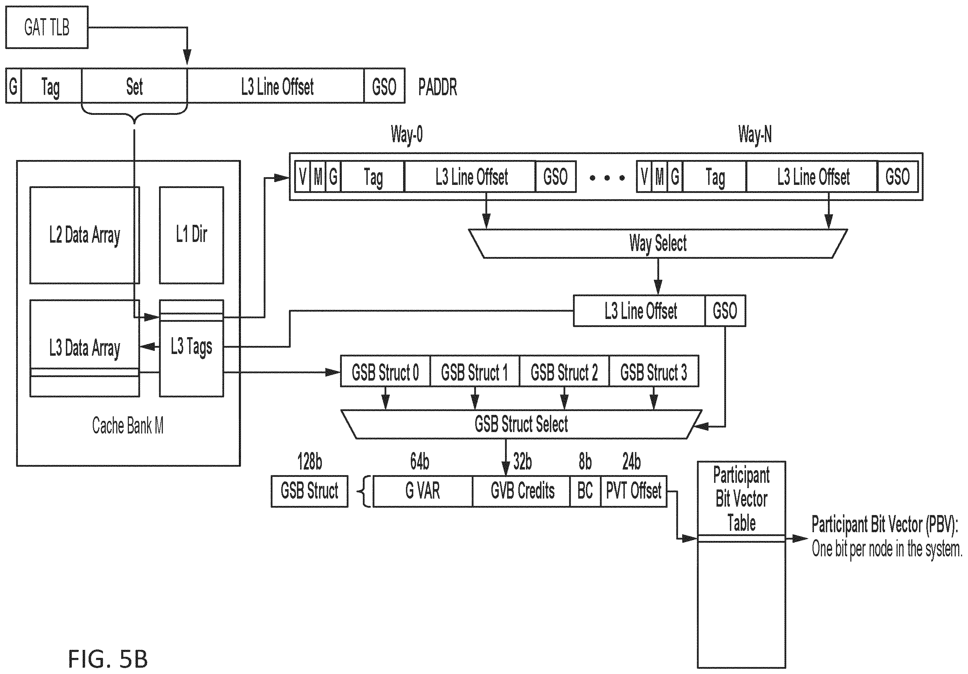

FIG. 5B illustrates a global load and broadcast operation. This operation may allow a node to broadcast a notification to all nodes by reading from a designated global memory address. Flag definitions are the same as for FIG. 5A except that GSO is a GSB structure offset. The fields of the GSB structure may include the following: G VAR, a global variable; GVB Credits, Global Variable Credits; BC, a bank cache (BC refers to the target L2 cache bank on the target node; the same cache bank may be targeted on all participating nodes); and PVT Offset, a participant bit vector table offset. For each global load at the home node L3, if L3 is hit, the home node may fetch an L3 line and select the target GSB structure. It may then return the L3 line to the requester, with the associated word enable bits set. If GVB_Credits equals 0, then the home node may fetch a PBV table entry. For each bit that is equal to 1, the home node may cache inject G VAR to the specified L2 on that node, which may injects a 64 byte line with associated word enable bits set (read-modify-write (RMW)). Otherwise, if an L3 miss, has occurred, the home node may fetch an L3 line from back memory, install it in L3 and continue processing as though a hit had occurred.

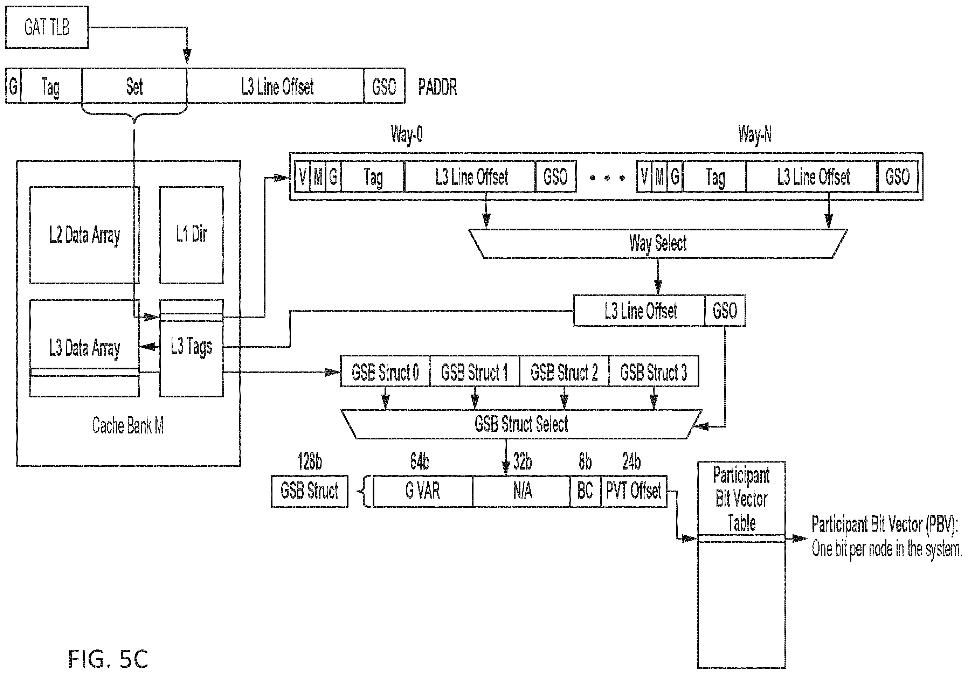

FIG. 5C illustrates a global store and broadcast operation. This operation may allow a node to broadcast a notification to all nodes by writing to a designated global memory address. Flag definitions and GSB structure fields are the same as for FIG. 5B except that in the GSB structure, N/A signifies global variable credits not applicable. For each global store at the home node L3, if L3 is hit, the home node may fetch an L3 line and select the target GSB structure. It may then overwrite G VAR with the value from the global store transaction, and fetch a PBV table entry. For each bit that is equal to 1, the home node may cache inject G VAR to the specified L2 on that node, which may injects a 64 byte line with associated word enable bits set (read-modify-write (RMW)). Otherwise, if an L3 miss, has occurred, the home node may fetch an L3 line from back memory, install it in L3 and continue processing as though a hit had occurred.

Some embodiments include the following hardware features. A first set of such hardware features may allow for global addresses to be handled by the caches differently from local addresses. Caches may have the ability to invalidate all global addresses as indicated by an upper bit in the physical address. A shadow cache for modified global data may be used to reduce latency when all modified global data is flushed to the home node. This cache may only hold modified global data and be kept coherent with the rest of the local node. Hardware may be used to speed up the identification of global address lines in a cache to both flush them and invalidate them. An alternate mechanism to track the number and range of addresses to allow for the pacing of flushes in a table may be provided. A hardware ability may be provided to determine the number of addresses which when translated into external physical node and external node physical address. A hardware ability may be provided to translate contiguous global memory into memory striped or hashed across multiple physical nodes to allow for much better access to memory arrays frequently accessed by memory nodes. A hardware ability may be provided to reverse translate this striping/hashing to allow a node 105 to throttle flushing to allow for a globally controlled flushing if necessary to avoid overflowing a table. An ability may be provided to limit flushing addresses in a specified range to the home node. A table on each node that tracks global writes and keeps tracks of sub cache line bytes may be provided, to allow for correct behavior when false sharing activity occurs. This table may do two things: (i) identify incorrect program model usage (more than one node wrote to the same byte during a single time step, and (ii) allow for the byte tracking to be aware when false sharing but not incorrect behavior has occurred. This may be done with RMW to local HBM together with a static random access memory (SRAM) table with associative access. A mechanism may be provided to avoid table overflow and to throttle it back. Two possible schemes may be employed: (i) a throttling mechanism that stops sending nodes from sending too much data, or (ii) a software or hardware scheme which handles the case of a table overflow at the local node. This is not performance critical but may be correctness critical. This software or hardware may stop accepting new external writes to local dynamic random access memory (DRAM) and move the table to a software implementation that would take over in the unlikely case that the local table is overflowed. All writes may then be allowed to proceed but may be processed by software not in hardware.

A second set of such hardware features may allow load/store global communication. A user may be able to access global memory through a normal threaded program model. The external loads and stores may be cached locally after fetching the data through messages over the inter-node dedicated network.

A third set of such hardware features may allow versioning of caches. In such an embodiment, cache lines tags are augmented with version numbers associated with time steps, and a remote node is allowed to send a modified cache line to another node (i.e., flush), but the home node buffers the line until the time step completes.

A third set of such hardware features may allow atomic instructions (or "atomics") to be performed. The cache design may recognize global atomics and always make the atomics visible to the local internal global interface to allow for the atomic to be executed in the remote home node. Local LLC will have a set of collective and atomic operations that are cached and can be utilized by both the local cores and the external network accesses.

A third set of such hardware features may allow violation tracking that detects incorrect program model usage (more than one node writing to an address in a time step). The hardware may maintain a tracking structure at home node that has entries of the form (Address, Source node ID, position/8 byte quantity). All nodes may be allowed to read. All nodes may be allowed to write. The home node may check a tracker to see whether there is a slot to put store in. If there is no place to enter in tracker, the node may stop time step mode. At end of time step, the system may do the following (i) flush all remote lines from cache; (ii) for each remote dirty line, do a read modify write to memory to see what position (byte) changed; (iii) read all previous stores to the same address in the tracker to see what position was modified by them, (iv) if the byte value at position is different at RMW and another node has written, a violation may be flagged (v) if the byte is the same and another node wrote the same position, no violation is flagged; and (vi) if the byte is different and no other node has written (e.g., the same node wrote multiple times) no violation is flagged.

As used herein, "a portion of" something means "at least some of" the thing, and as such may mean less than all of, or all of, the thing. As such, "a portion of" a thing includes the entire thing as a special case, i.e., the entire thing is an example of a portion of the thing. As used herein, when a second quantity is "within Y" of a first quantity X, it means that the second quantity is at least X-Y and the second quantity is at most X+Y. As used herein, when a second number is "within Y%" of a first number, it means that the second number is at least (1-Y/100) times the first number and the second number is at most (1+Y/100) times the first number. As used herein, the word "or" is inclusive, so that, for example, "A or B" means any one of (i) A, (ii) B, and (iii) A and B.

Each of the terms "processing circuit" and "means for processing" is used herein to mean any combination of hardware, firmware, and software, employed to process data or digital signals. Processing circuit hardware may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processing circuit, as used herein, each function is performed either by hardware configured, i.e., hard-wired, to perform that function, or by more general-purpose hardware, such as a CPU, configured to execute instructions stored in a non-transitory storage medium. A processing circuit may be fabricated on a single printed circuit board (PCB) or distributed over several interconnected PCBs. A processing circuit may contain other processing circuits; for example, a processing circuit may include two processing circuits, an FPGA and a CPU, interconnected on a PCB.

As used herein, when a method (e.g., an adjustment) or a first quantity (e.g., a first variable) is referred to as being "based on" a second quantity (e.g., a second variable) it means that the second quantity is an input to the method or influences the first quantity, e.g., the second quantity may be an input (e.g., the only input, or one of several inputs) to a function that calculates the first quantity, or the first quantity may be equal to the second quantity, or the first quantity may be the same as (e.g., stored at the same location or locations in memory as) the second quantity.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section, without departing from the scope of the inventive concept.

Spatially relative terms, such as "beneath", "below", "lower", "under", "above", "upper" and the like, may be used herein for ease of description to describe one element or feature's relationship to another element(s) or feature(s) as illustrated in the figures. It will be understood that such spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly. In addition, it will also be understood that when a layer is referred to as being "between" two layers, it can be the only layer between the two layers, or one or more intervening layers may also be present.

The terminology used herein is for the purpose of describing particular embodiments only and is not intended to be limiting of the inventive concept. As used herein, the terms "substantially," "about," and similar terms are used as terms of approximation and not as terms of degree, and are intended to account for the inherent deviations in measured or calculated values that would be recognized by those of ordinary skill in the art.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

It will be understood that when an element or layer is referred to as being "on", "connected to", "coupled to", or "adjacent to" another element or layer, it may be directly on, connected to, coupled to, or adjacent to the other element or layer, or one or more intervening elements or layers may be present. In contrast, when an element or layer is referred to as being "directly on", "directly connected to", "directly coupled to", or "immediately adjacent to" another element or layer, there are no intervening elements or layers present.

Any numerical range recited herein is intended to include all sub-ranges of the same numerical precision subsumed within the recited range. For example, a range of "1.0 to 10.0" or "between 1.0 and 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Similarly, a range described as "within 35% of 10" is intended to include all subranges between (and including) the recited minimum value of 6.5 (i.e., (1 - 35/100) times 10) and the recited maximum value of 13.5 (i.e., (1 + 35/100) times 10), that is, having a minimum value equal to or greater than 6.5 and a maximum value equal to or less than 13.5, such as, for example, 7.4 to 10.6. Any maximum numerical limitation recited herein is intended to include all lower numerical limitations subsumed therein and any minimum numerical limitation recited in this specification is intended to include all higher numerical limitations subsumed therein.

It will be understood that when an element is referred to as being "directly connected" or "directly coupled" to another element, there are no intervening elements present. As used herein, "generally connected" means connected by an electrical path that may contain arbitrary intervening elements, including intervening elements the presence of which qualitatively changes the behavior of the circuit. As used herein, "connected" means (i) "directly connected" or (ii) connected with intervening elements, the intervening elements being ones (e.g., low-value resistors or inductors, or short sections of transmission line) that do not qualitatively affect the behavior of the circuit.

Although exemplary embodiments of systems and methods for computing with multiple nodes have been specifically described and illustrated herein, many modifications and variations will be apparent to those skilled in the art. Accordingly, it is to be understood that systems and methods for computing with multiple nodes constructed according to principles of this disclosure may be embodied other than as specifically described herein. The invention is defined in the following claims.

## Claims

1. A method, comprising:
reading, by a first node (Node 1) of a plurality of nodes (Node 1, Node 2, Node 3), from a shared memory shared by the nodes (Node 1, Node 2, Node 3), a first data value;
modifying, by the first node (Node 1), the first data value;
storing, by the first node (Node 1), the modified first data value in a cache of the first node (Node 1); and
initiating, by the first node (Node 1), a global synchronization command; and
**characterized by**
in response to the initiating, by the first node (Node 1), of the global synchronization command:
indicating to the other nodes (Node 2, Node 3) of the plurality of nodes (Node 1, Node 2, Node 3), by the first node (Node 1), that the first node (Node 1) has completed a time step synchronization,
wherein a time step is the interval between two consecutive global synchronization operations, and
wherein the first node (Node 1) having completed a time step synchronization means that the first node is prepared to resume normal processing, and is waiting, if necessary, for each of the other nodes (Node 2, Node 3) to complete a time step synchronization.

2. The method of claim 1, further comprising flushing, by the first node (Node 1), the modified first data value to the shared memory.

3. The method of claim 1 or 2, further comprising invalidating, by the first node (Node 1), a portion of the cache (120) of the first node (Node 1).

4. The method of claim 3, wherein the portion of the cache (120) is all of the cache (120).

5. The method of claim 3 or 4, wherein the portion of the cache (120) excludes a constant value.

6. The method of any one of claims 3 to 5, wherein the portion of the cache (120) excludes a protected data value.

7. The method of any one of claims 1 to 6, further comprising:
reading, by the first node (Node 1), from the shared memory, a second data value;
storing, by the first node (Node 1), the second data value in the cache of the first node (Node 1); and
in response to the initiating, by the first node (Node 1), of the global synchronization command:
performing an initial read of the second data value as a global load operation,
the global load operation comprising reading the second data value from the shared memory.

8. The method of claim 7, further comprising:
determining that the second data value is in the cache (120) of the first node (Node 1); and
overwriting the second data value in the cache (120) of the first node (Node 1) with the second data value read by the initial read.

9. The method of any one of claims 1 to 8, further comprising not reading from the shared memory, by the first node (Node 1), until the first node (Node 1) has received an indication of time step synchronization completion from the other nodes (Node 2, Node 3) of the plurality of nodes (Node 1, Node 2, Node 3).

10. The method of claim 9, wherein the indicating comprises incrementing a count in the shared memory, and the receiving of the indication of time step synchronization completion comprises reading, from the shared memory, a value equal to the number of nodes in the plurality of nodes (Node 1, Node 2, Node 3).

11. A system, comprising:
a processing circuit; and
a memory operatively coupled to the processing circuit,
the memory storing instructions that, when executed by the processing circuit, cause the processing circuit to perform a method of any one of the preceding claims.

## Patentansprüche

1. Verfahren, umfassend:
Lesen eines ersten Datenwerts durch einen ersten Knoten (Node 1) aus einem von mehreren Knoten (Node 1, Node 2, Node 3) gemeinsam genutzten Speicher;
Modifizieren des ersten Datenwerts durch den ersten Knoten (Node 1);
Speichern des modifizierten ersten Datenwerts durch den ersten Knoten (Node 1) in einem Cache des ersten Knotens (Node 1); und
Initiieren eines globalen Synchronisationsbefehls durch den ersten Knoten (Node 1);
**dadurch gekennzeichnet, dass**
als Reaktion auf das Initiieren des globalen Synchronisationsbefehls durch den ersten Knoten (Node 1):
ein Anzeigen gegenüber den anderen Knoten (Node 2, Node 3) der Mehrzahl von Knoten (Node 1, Node 2, Node 3) durch den ersten Knoten (Node 1) erfolgt, dass der erste Knoten (Node 1) eine Zeitschritt-Synchronisation abgeschlossen hat,
wobei ein Zeitschritt das Intervall zwischen zwei aufeinanderfolgenden globalen Synchronisationsoperationen ist, und
wobei das Abschließen einer Zeitschritt-Synchronisation durch den ersten Knoten (Node 1) bedeutet, dass der erste Knoten bereit ist, die normale Verarbeitung wieder aufzunehmen und, falls erforderlich, auf den Abschluss der Zeitschritt-Synchronisation durch jeden der anderen Knoten (Node 2, Node 3) wartet.

2. Verfahren nach Anspruch 1, ferner umfassend: Zurückschreiben des modifizierten ersten Datenwerts durch den ersten Knoten (Node 1) in den gemeinsamen Speicher.

3. Verfahren nach Anspruch 1 oder 2, ferner umfassend: Invalidieren eines Teils des Caches (120) des ersten Knotens (Node 1) durch den ersten Knoten (Node 1).

4. Verfahren nach Anspruch 3, wobei der Teil des Caches (120) die Gesamtheit des Caches (120) ist.

5. Verfahren nach Anspruch 3 oder 4, wobei der Teil des Caches (120) einen Konstantwert ausschließt.

6. Verfahren nach einem der Ansprüche 3 bis 5, wobei der Teil des Caches (120) einen geschützten Datenwert ausschließt.

7. Verfahren nach einem der Ansprüche 1 bis 6, ferner umfassend:
Lesen eines zweiten Datenwerts durch den ersten Knoten (Node 1) aus dem gemeinsamen Speicher;
Speichern des zweiten Datenwerts durch den ersten Knoten (Node 1) im Cache des ersten Knotens (Node 1); und
als Reaktion auf das Initiieren des globalen Synchronisationsbefehls durch den ersten Knoten (Node 1):
ein Ausführen eines initialen Lesens des zweiten Datenwerts als globale Leseoperation,
wobei die globale Leseoperation das Lesen des zweiten Datenwerts aus dem gemeinsamen Speicher umfasst.

8. Verfahren nach Anspruch 7, ferner umfassend:
Feststellen, dass sich der zweite Datenwert im Cache (120) des ersten Knotens (Node 1) befindet; und
Überschreiben des zweiten Datenwerts im Cache (120) des ersten Knotens (Node 1) mit dem durch das initiale Lesen gelesenen zweiten Datenwert.

9. Verfahren nach einem der Ansprüche 1 bis 8, ferner umfassend: kein Lesen aus dem gemeinsamen Speicher durch den ersten Knoten (Node 1), bis der erste Knoten (Node 1) eine Anzeige über den Abschluss der Zeitschritt-Synchronisation von den anderen Knoten (Node 2, Node 3) der Mehrzahl von Knoten (Node 1, Node 2, Node 3) erhalten hat.

10. Verfahren nach Anspruch 9, wobei das Anzeigen ein Inkrementieren eines Zählwerts im gemeinsamen Speicher umfasst, und wobei das Empfangen der Anzeige über den Abschluss der Zeitschritt-Synchronisation ein Lesen eines Wertes aus dem gemeinsamen Speicher umfasst, der der Anzahl der Knoten der Mehrzahl von Knoten (Node 1, Node 2, Node 3) entspricht.

11. System, umfassend:
eine Verarbeitungsschaltung; und
einen Speicher, der funktionell mit der Verarbeitungsschaltung gekoppelt ist,
wobei der Speicher Anweisungen speichert, die, wenn sie von der Verarbeitungsschaltung ausgeführt werden, die Verarbeitungsschaltung veranlassen, ein Verfahren gemäß einem der vorhergehenden Ansprüche auszuführen.

## Revendications

1. Procédé, comprenant:
lecture, par un premier nœud (Node 1) parmi une pluralité de nœuds (Node 1, Node 2, Node 3), à partir d'une mémoire partagée entre les nœuds (Node 1, Node 2, Node 3), d'une première valeur de données;
modification, par le premier nœud (Node 1), de la première valeur de données;
enregistrement, par le premier nœud (Node 1), de la première valeur de données modifiée dans un cache du premier nœud (Node 1); et
initiation, par le premier nœud (Node 1), d'une commande de synchronisation globale;
**caractérisé en ce que**,
en réponse à l'initiation, par le premier nœud (Node 1), de la commande de synchronisation globale:
le premier nœud (Node 1) indique aux autres nœuds (Node 2, Node 3) de la pluralité de nœuds (Node 1, Node 2, Node 3) que le premier nœud (Node 1) a terminé une synchronisation de pas de temps,
un pas de temps étant l'intervalle entre deux opérations consécutives de synchronisation globale, et
le fait que le premier nœud (Node 1) a terminé une synchronisation de pas de temps signifiant que le premier nœud est prêt à reprendre un traitement normal, et attend, si nécessaire, que chacun des autres nœuds (Node 2, Node 3) termine une synchronisation de pas de temps.

2. Procédé selon la revendication 1, comprenant en outre: vidage, par le premier nœud (Node 1), de la première valeur de données modifiée vers la mémoire partagée.

3. Procédé selon la revendication 1 ou 2, comprenant en outre: invalidation, par le premier nœud (Node 1), d'une portion du cache (120) du premier nœud (Node 1).

4. Procédé selon la revendication 3, dans lequel la portion du cache (120) est l'ensemble du cache (120).

5. Procédé selon la revendication 3 ou 4, dans lequel la portion du cache (120) exclut une valeur constante.

6. Procédé selon l'une quelconque des revendications 3 à 5, dans lequel la portion du cache (120) exclut une valeur de données protégée.

7. Procédé selon l'une quelconque des revendications 1 à 6, comprenant en outre:
lecture, par le premier nœud (Node 1), à partir de la mémoire partagée, d'une deuxième valeur de données;
enregistrement, par le premier nœud (Node 1), de la deuxième valeur de données dans le cache du premier nœud (Node 1); et
en réponse à l'initiation, par le premier nœud (Node 1), de la commande de synchronisation globale:
exécution d'une lecture initiale de la deuxième valeur de données en tant qu'opération de chargement global,
l'opération de chargement global comprenant la lecture de la deuxième valeur de données à partir de la mémoire partagée.

8. Procédé selon la revendication 7, comprenant en outre:
détermination que la deuxième valeur de données est présente dans le cache (120) du premier nœud (Node 1); et
remplacement de la deuxième valeur de données dans le cache (120) du premier nœud (Node 1) par la deuxième valeur de données lue lors de la lecture initiale.

9. Procédé selon l'une quelconque des revendications 1 à 8, comprenant en outre l'absence de lecture, par le premier nœud (Node 1), à partir de la mémoire partagée, jusqu'à ce que le premier nœud (Node 1) ait reçu une indication de l'achèvement de la synchronisation de pas de temps en provenance des autres nœuds (Node 2, Node 3) de la pluralité de nœuds (Node 1, Node 2, Node 3).

10. Procédé selon la revendication 9, dans lequel l'indication comprend:
incrémentation d'un compteur dans la mémoire partagée, et dans lequel la réception de l'indication d'achèvement de la synchronisation de pas de temps comprend: lecture, à partir de la mémoire partagée, d'une valeur égale au nombre de nœuds de la pluralité de nœuds (Node 1, Node 2, Node 3).

11. Système, comprenant:
un circuit de traitement; et
une mémoire couplée de manière fonctionnelle au circuit de traitement,
la mémoire stockant des instructions qui, lorsqu'elles sont exécutées par le circuit de traitement, amènent le circuit de traitement à exécuter un procédé selon l'une quelconque des revendications précédentes.
